# EUROPÄISCHE PATENTSCHRIFT

(11) **EP 1 140 666 B1**
(45) Veröffentlichungstag und Bekanntmachung des Hinweises auf die Patenterteilung: **26.01.2005**
(21) Anmeldenummer: 99958020.2
(22) Anmeldetag: 11.11.1999
(51) Int. Cl.: B65D 85/68, B65D 25/10

(54) **VORRICHTUNG ZUR AUFBEWAHRUNG UND ZUM TRANSPORT VON FLACHEN GEGENSTÄNDEN**
DEVICE FOR STORING AND TRANSPORTING FLAT OBJECTS
DISPOSITIF POUR CONSERVER ET TRANSPORTER DES OBJETS PLATS

(30) Priorität: 14.12.1998 DE 19857575
(43) Veröffentlichungstag der Anmeldung: 10.10.2001
(73) Patentinhaber: Conteyor Multibag Systems N.V., 9820 Merelbeke (BE)
(72) Erfinder: VERMEULEN, Bart, B-8710 Wielsbeke (BE); HUGENHOLTZ, Roland, Patrick, B-9830 Sint-Martens-Latern (BE)
(74) Vertreter: Weber, Dieter, Dr.
(86) Internationale Anmeldenummer: PCT/EP1999/008660
(87) Internationale Veröffentlichungsnummer: WO 2000/035778

(56) Entgegenhaltungen:
- EP-A- 0 865 991
- DE-A- 4 138 507
- DE-U- 8 914 625
- DE-U- 29 501 898
- DE-U- 29 712 829

## Beschreibung

Die vorliegende Erfindung betrifft eine Vorrichtung zur Aufbewahrung und zum Transport von flachen, im wesentlichen zweidimensionalen Gegenständen, bestehend aus einem Gestell oder dergleichen, in welchem Taschen aufgehängt sind, die im Querschnitt im wesentlichen U-förmig sind und in welche jeweils ein entsprechender Gegenstand einlegbar ist.

Eine entsprechende Vorrichtung ist zum Beispiel aus der deutschen Patentanmeldung P 41 38 507 bekannt.

Bei entsprechenden Vorrichtungen, die inzwischen eine relativ weite Verbreitung gefunden haben, erfolgt die Beladung teilweise von der oberen, offenen Seite der U-förmigen Taschen, teilweise aber auch von den Stirnseiten der Taschen her, die zu diesem Zweck ebenfalls offen sind. Dies gilt insbesondere dann, wenn die Taschen in einem relativ hohen Gestell aufgehängt sind, so daß sie von oben nur schlecht beladen werden könnten. Wenn die betreffende Tasche von der Seite her, d.h. von ihren offenen Stimseiten her be- bzw. entladen werden, so muß entweder das betreffende Gestell seitlich offen sein oder aber die Taschen müssen, falls die Seiten eines solchen Gestells geschlossen sind, mit ihrer Aufhängung aus dem Gestell so weit herausgezogen werden, daß sie von ihren Stirnseiten her zugänglich sind.

Dann können flache Gegenstände, wie zum Beispiel Türverkleidungen von Pkw's in diese Taschen eingeschoben werden und später, dort wo sie für die Montage benötigt werden, wieder umgekehrt aus den offenen Stirnseiten der Taschen herausgezogen werden.

Entsprechende Vorrichtungen haben inzwischen in der Automobilindustrie eine relativ weite Verbreitung gefunden. Allerdings sind die in der Automobilindustrie aufzubewahrenden und zu transportierenden Bauteile oftmals von sehr unregelmäßiger Form und dies gilt zum Beispiel auch für die erwähnten inneren Türverkleidungen von Pkw's, die im Regelfall nicht einfach rechteckige Platten sind, sondern einen mehr oder weniger trapezförmigen Umriß mit abgerundeten Ecken haben. Für die Handhabung und den Einbau entsprechender Teile ist es zweckmäßig, wenn sie von vornherein in der richtigen Orientierung in die Taschen eingelegt werden und nicht erst von der Person, die später zum Beispiel den Einbau entsprechender Teile in größeren Systemen oder Anlagen vornimmt, in die richtige Lage gedreht werden müssen. Um wieder beim Beispiel der Türverkleidungen von Kfz's zu bleiben, so liegt deren kurze Trapezseite oftmals unten und die längere Trapezseite oben. Das Trapez ist außerdem schiefwinklig oder die Verkleidung kann auch eine mehr oder weniger fünfeckige Form mit zwei gegenüberliegenden parallelen Seiten haben, von denen wiederum die untere die kürzere Seite ist, die auch zur oberen Seite nicht symmetrisch liegt. Dies bedeutet, daß entsprechende Gegenstände in den U-förmigen Taschen die Tendenz haben, zu verkippen und dabei gegebenenfalls auch zu verrutschen. Dies erschwert die Handhabung beim Herausnehmen und kann auch zu Beschädigungen der betreffenden Gegenstände führen, wenn sie dabei nämlich teilweise aus den offenen Stirnseiten der Taschen herausrutschen.

Aus dem deutschen Gebrauchsmuster Nr. 295 01 898.4 sind Aktendeckel für eine Hängeregistratur bekannt, wobei die Akten sogenannte "Leinenfrösche" aufweisen, die auf einer Seite lösbar mit dem Aktendeckel verbunden sind. Diese Leinenfrösche sind jedoch auf der Außenseite der Aktendeckel befestigt und sie dienen dem Zweck, daß nach dem Herausnehmen eines solchen Aktendeckels aus dem Gestell einer Hängeregistratur die Leinenfrösche gelöst werden und der Aktendeckel somit vollständig aufgeklappt werden kann, um Papiere einzulegen oder zu entnehmen. Dieser Druckschrift ist jedoch kein Hinweis auf ein stimseitiges Beladen und auf ein Freigeben des stimseitigen Querschnitts durch Lösen der Leinenfrösche zu entnehmen. Vielmehr würde auch das Lösen der Leinenfrösche auf einer Seite nicht dazu führen, daß der Beladequerschnitt vollständig freigegeben wird, da ein solcher herabhängender Leinenfrosch immer noch teilweise in den Bereich zwischen den Aktendeckeln hineinragt. Insbesondere wenn mehrere Aktendeckel eng benachbart in einem Gestell angeordnet sind, würden auch die Leinenfrösche von benachbarten Deckeln den Beladequerschnitt einer benachbarten Akte verdecken, falls eine stimseitige Beschickung vorgesehen wäre. Darüber hinaus sind die Leinenfrösche noch auf der Außenseite des Aktendeckels angeordnet und befestigt, können also Gegenstände, die kleiner sind als der Aktendeckel selbst, nicht hinreichend gegen ein Verrutschen oder Verkippen festhalten.

Gegenüber diesem Stand der Technik liegt der vorliegenden Erfindung die Aufgabe zugrunde, eine Vorrichtung mit den eingangs genannten Merkmalen zu schaffen, durch welche ein Verkippen und/oder Herausrutschen der in den U-förmigen Taschen aufgenommenen Gegenstände weitgehend vermieden werden kann.

Diese Aufgabe wird dadurch gelöst, daß die Taschen derart angeordnet sind, daß jeweils im hängenden Zustand der Taschen Gegenstände von ihrer Stirnseite her einlegbar und entnehmbar sind, und daß im Inneren der Taschen Einrichtungen vorgesehen sind, die ein Verkippen oder Verrutschen der Gegenstände in den Taschen nach vom oder hinten verhindern und die zum stirnseitigen Be- und Entladen der Taschen in eine Position bringbar sind, in weicher sie den freien Beladequerschnitt nicht einengen.

Die erfindungsgemäßen Einrichtungen können sehr unterschiedlich ausgestaltet sein, wobei allerdings darauf zu achten ist, daß sie den durch die offene Stirnseite definierten (und im wesentlichen durchgehend konstanten) freien Beladequerschnitt der Taschen nicht ändern.

Zum Beispiel kann die Einrichtung ein entlang der Innenseite einer Seitenwand der Tasche (1) gespanntes, vorzugsweise elastisches Band sein, in welches der Gegenstand (10) mit einem hakenförmig umgebogenen Teil eingehängt werden kann.

Ein solches gespanntes, elastisches Band legt sich, wenn es nicht benötigt wird, eng an die Seitenwand der Tasche an und engt damit den freien Beladequerschnitt der Taschen nicht ein.

In einer anderen Ausführungsform, die nicht darauf angewiesen ist, daß sich an dem Gegenstand ein hakenförmig umgebogenes Teil befindet, und die insoweit bevorzugt ist, ist vorgesehen, daß mindestens für eine der offenen Stirnseiten der U-förmigen Tasche ein Querteil vorgesehen ist, welches in mindestens eine, die offene Stirnseite im wesentlichen freigebende Stellung und in eine, die offene Stirnseite mindestens teilweise verschließende Stellung bewegbar und in der letztgenannten Stellung fixierbar ist.

Diese Ausgestaltung der Vorrichtung hat den Vorteil, daß in der Stellung, in welcher das Querteil die offene Stirnseite der U-förmigen Tasche vollständig freigibt, das Be- und Entladen der Tasche in herkömmlicher Weise genau so erfolgen kann, als sei das Querteil überhaupt nicht vorhanden, da es eben die offene Stirnseite der U-förmigen Tasche vollständig freigibt. Andererseits kann diese offene Stirnseite, nachdem der betreffende Gegenstand eingeschoben worden ist, durch das Querteil zumindest teilweise verschlossen werden, wodurch ein Herausrutschen und/oder Verkippen des in der Tasche aufgenommenen Gegenstandes wirksam verhindert wird.

Dabei ist es grundsätzlich zweckmäßig, wenn das Querteil in seiner die Stirnseite der U-Tasche mindestens teilweise verschließenden Stellung im Inneren der Tasche und im Abstand von dem Rand dieser offenen Stirnseite angeordnet ist.

Es versteht sich, daß entsprechende Querteile an beiden offenen Stirnseiten einer solchen U-förmigen Tasche angeordnet sein könnten, wobei es allerdings bevorzugt ist, wenn diese Querteile nur an einer offenen Stirnseite vorgesehen werden, während die andere Stirnseite zum Beispiel dauerhaft verschlossen bzw. teilweise verschlossen sein kann, zum Beispiel durch irgendeinen die beiden gegenüberliegenden U-Schenkel verbindenden Abschnitt einer Materialbahn, der sich aber nicht notwendigerweise über die gesamte Höhe der Tasche bzw. der offenen Stirnseite erstrecken muß. Dieser zusätzliche Querabschnitt auf der im folgenden als "Rückseite" bezeichneten offenen Stirnseite der Taschen dient sozusagen als "Anschlag" für die von der anderen, offenen Stirnseite her eingeschobenen Gegenstände. Es versteht sich, daß auch dieser quer auf der Rückseite der Taschen verlaufende Verbindungsabschnitt im Abstand von der rückseitigen, offenen Stirnseite vorgesehen sein kann, um zum Beispiel zu verhindern, daß unter Verformung dieses Querabschnittes ein Teil des in der Tasche aufgenommenen Gegenstand womöglich doch aus der Rückseite der U-förmigen Tasche hervorsteht.

Nachdem der Gegenstand in die Tasche eingeschoben worden ist, wird das Querteil in die Stellung gebracht, in welcher es die zunächst offene Stirnseite mindestens teilweise verschließt, wodurch der in der Tasche aufgenommene Gegenstand nicht bzw. nur so weit verrutschen oder verkippen kann, bis er an dieses Querteil anstößt, welches die vordere, offene Stirnseite teilweise verschließt. Es versteht sich, daß die Taschen der Größe der darin aufzunehmenden Gegenstände angepaßt sind und daß auch die Anordnung des quer verlaufenden Abschnittes auf der Rückseite sowie des Querteiles auf der offenen Vorderseite derart vorgesehen ist, daß der in der Tasche aufgenommene Gegenstand nicht allzuviel Spiel zwischen den beiden quer verlaufenden Teilen hat.

Besonders bevorzugt ist eine Ausführungsform der Erfindung, bei welcher das Querteil an der offenen Stimseite aus einem Endabschnitt des unteren, den Grund der Tasche bildenden U-Abschnittes gebildet ist. Dies ist insbesondere dann zweckmäßig, wenn beim Verrutschen oder Verkippen des in der Tasche aufgenommenen Gegenstände sich vor allem dessen unteres, unmittelbar über dem Grund der Tasche befindendes vorderes Ende die Tendenz hat, aus der offenen Stirnseite der Tasche herauszurutschen bzw. herauszuragen. Dies wird dann dadurch wirksam verhindert, daß gerade der untere Endabschnitt der U-förmigen Tasche gleichzeitig auch das Querteil bildet. Dies geschieht zum Beispiel dadurch, daß der untere Endabschnitt des Grundes der Tasche nach innen in die Tasche eingefaltet wird, so daß der untere Endabchnitt vertikal nach oben steht und damit den unteren Teil der Stirnseite der U-förmigen Tasche verschließt.

Zweckmäßigerweise ist dieser Endabschnitt aus einem halbsteifen Material gebildet, welches vorzugsweise steifer ist als die Seitenteile der Tasche, welche im Querschnitt als die Schenkel der U-Form erscheinen.

Konkret kann diese Ausgestaltung derart vorgenommen werden, daß zum Beispiel der untere Endabschnitt des unteren U-Teiles der Tasche aus einem mindestens teilweise doppelwandigen, flexiblen Bahnmaterial hergestellt ist, wobei zwischen die beiden Wände dieses doppelwandigen Bahnmaterials mindestens eine kurze, halbsteife Endabschnittsplatte eingeschoben ist. Diese Platte ist dann entweder in eine horizontale Lage zu klappen, in welcher dieser Endabschnitt den vorderen Teil des Grundes der U-förmigen Tasche bildet, oder aber in eine vertikal hochgeklappten bzw. hochgefalteten Stellung zu bringen, in welcher sie den unteren Teil der ansonsten offenen Stirnseite der U-förmigen Tasche verschließt.

Zweckmäßigerweise sind die U-förmigen Taschen derart aufgebaut, daß sie aus zwei Seitenteilen bestehen, die im Querschnitt die beiden U-Schenkel definieren, wobei ein unterer U-Abschnitt, welcher die beiden Schenkel des U verbindet, seinerseits nochmals U-förmig ausgebildet ist, allerdings mit wesentlich kürzeren U-Schenkeln als die Tasche insgesamt. Diese kürzeren U-Schenkel können an die Innenflächen der langen U-Schenkel angenäht angeklebt oder angeschweißt sein.

Bevorzugt ist dabei eine Ausführungsform, bei welcher der gesamte Grund der Tasche aus einem halbsteifen Material gebildet ist, wobei der vordere Endabschnitt des halbsteifen Materials des Grundes der U-Tasche gegenüber dem übrigen Teil abknickbar ist, so daß dieser Endabschnitt nach oben geklappt werden kann und dadurch den unteren Teil der offenen Stirnseite verschließt.

Damit diese Stellung besonders sicher fixiert ist, ist in der bevorzugten Ausführungsform der Erfindung vorgesehen, daß an dem vorderen, halbsteifen Endabschnitt des Grundes der U-Tasche seitlich jeweils dreieckige Lappen aus einem halbsteifen Material anschließen, die gegenüber dem Endabschnitt des Grundes des U leicht bewegbar sind und welche ebenfalls in das Innere der Tasche einfaltbar sind, wobei sie im wesentlichen parallel an den die U-Schenkel definierenden Seitenwänden der U-Tasche anliegen.

Zweckmäßigerweise kann der gesamte, untere U-Abschnitt aus einem doppelwandigen Bahnmaterial bestehen, welches entsprechende Abnäher aufweist, so daß die halbsteife Platte des unteren Endabschnittes ebenso wie die seitlich daran angrenzenden dreieckigen Platten in entsprechende Hohlräume des doppelwandigen Materials eingeschoben werden können.

Außerdem ist es zweckmäßig, wenn die Seitenwände der U-förmigen Taschen mehr oder weniger gespannt werden können. Dies kann man zum Beispiel dadurch erreichen, daß die Taschen, in der Seitenansicht gesehen, an mindestens drei ihrer Ecken aufgehängt bzw. fixiert werden, d.h. daß sie neben der Aufhängung ihres oberen Endes, beispielsweise an den vorderen und hinteren oberen Eckbereichen der Taschen, mindestens einen weiteren Aufhängepunkt an einer unteren Ecke, und zwar vorzugsweise an der vorderen unteren Ecke aufweisen.

Am einfachsten kann man dies dadurch erreichen, daß man die Seitenwände der Taschen, welche die U-Schenkel der U-Form definieren, über den unteren U-Abschnitt hinaus noch etwas verlängert (so daß im Querschnitt im wesentlichen eine H-Form mit relativ kurzen, unteren H-Schenkeln entsteht), wobei die flexiblen Materialbahnen, aus welchen die Seitenteile vorzugsweise bestehen, jeweils Ösen in ihren vorderen und hinteren oberen Ecken und schließlich auch noch eine Öse an der vorderen unteren Ecke aufweisen und wobei diese Seitenwände der U-Taschen mit diesen Ösen auf entsprechende Stangen eines Gestells oder Rahmens aufgezogen sind, so daß sie in einem im wesentlichen aufgespannten Zustand gehalten werden können. Dadurch sind die Seitenwände zwar nach wie vor weich und nachgiebig, lassen sich jedoch seitlich nicht so leicht wegdrükken als wenn es sich nur um lose herabhängende Taschen handeln würde. Das Einfalten und wieder Ausfalten des unteren Endabschnittes in der Ausgestaltung mit den angrenzenden dreieckigen, halbsteifen Platten erfordert jedoch notwendigerweise ein seitliches Auseinanderdrücken der beiden U-Seitenflächen, so daß diese Seitenflächen, wenn sie zwischen entsprechenden Stangen gespannt sind, einem solchen Auseinanderdrücken einen gewissen Widerstand entgegensetzen, wodurch der untere, hochklappbare Endabschnitt des Grundes der U-Taschen in seiner hochgeklappten Stellung mehr oder weniger fixiert wird. Dies gilt insbesondere dann, wenn eine Vielzahl derartigen Taschen unmittelbar nebeneinander und unter Berührung der benachbarten Taschen in einem größeren Rahmen oder Gestell angeordnet sind, so daß für die einzelnen Seitenwände der Taschen nur sehr wenig Spiel für relative Bewegungen zur gegenüberliegenden Wand verbleibt.

Andererseits ist, da die Taschen insgesamt aus einem flexiblen Bahnmaterial bestehen, dieses Spiel dennoch ausreichend, um die Stirnseiten der einzelnen Taschen an ihren unteren Enden wahlweise zu öffnen oder zu verschließen.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Ausführungsform einer erfindungsgemäßen Tasche in perspektivischer Ansicht mit einem vor der offenen Stirnseite dieser Tasche angeordneten Gegenstand,
- Figur 2: eine Seitenansicht der Tasche mit dem darin angeordneten Gegenstand, wobei die eine Seitenwand der Tasche durchsichtig dargestellt ist,
- Figur 3: eine Detailansicht des unteren U-Abschnittes der in Figur 1 dargestellten Tasche,
- Figur 4: dasselbe Detail, jedoch mit einem heraufgeklappten, die Stirnseite der Tasche im unteren Bereich verschließenden Endabschnitt,
- Figur 5: eine weitere Ausführungsform einer erfindungsgemäßen Tasche mit einem Element zum Einhängen eines Gegenstandes und
- Figur 6: die Tasche aus Figur 5 in einer Seitenansicht mit dem darin aufgenommenen Gegenstand und mit einer durchsichtig dargestellten bzw. weggelassenen Seitenwand.

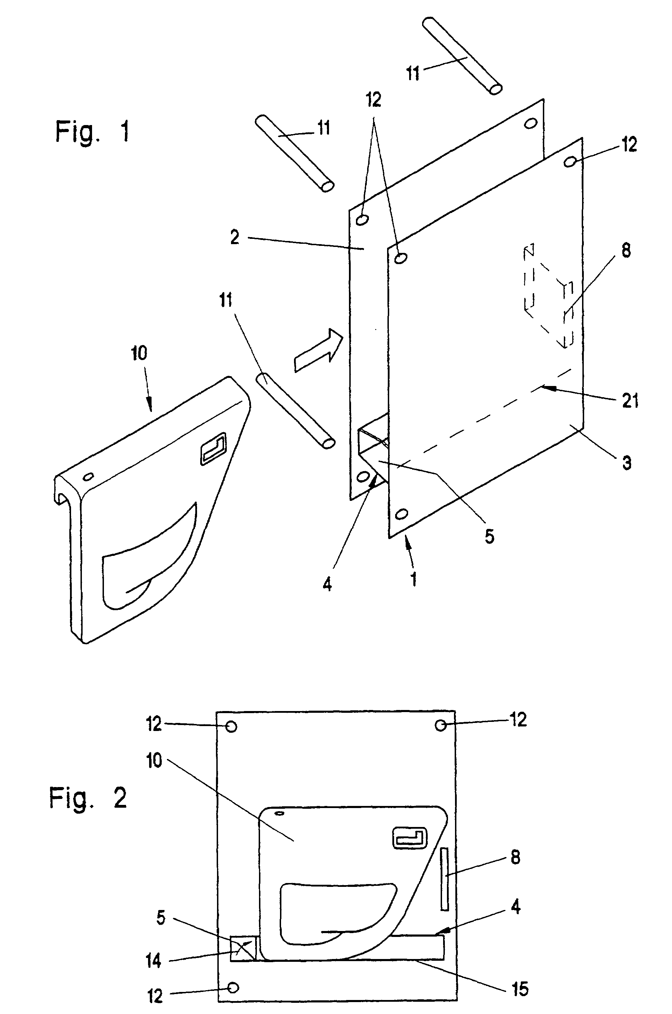

Wie man in Figur 1 erkennt, besteht die Tasche 1 im wesentlichen aus zwei parallelen, ebenen Seitenteilen 2, 3, die aus einem flexiblen Bahnmaterial hergestellt sind, und die in ihrem unteren Bereich durch einen unteren U-Abschnitt 4 miteinander verbunden sind. In der Stimansicht (aus der Sicht des in die Tasche einzuschiebenden Gegenstandes 10) ergibt sich damit zumindest für den oberen Teil dieser Tasche im wesentlichen eine U-Form, wobei allerdings die aus den beiden Seitenwänden 2, 3 bestehenden U-Schenkel noch über den unteren U-Quersteg hinaus nach unten verlängert sind, so daß sich im Querschnitt letztlich eine H-Form, mit allerdings sehr kurzen unteren H-Schenkeln ergibt, die nur noch der Fixierung der Seitenteile 2, 3 dienen. Der eigentliche Aufnahmeraum für die Gegenstände 10 wird nur durch den größeren, U-förmigen Bereich der Taschen definiert.

Die vordere Stirnseite dieser U-förmigen Tasche ist, wie man in Figur 1 erkennt, für die Aufnahme des darin einzuschiebenden Gegenstandes 10 offen. Die rückwärtige Stirnseite der U-Tasche 1 ist durch einen Verbindungsabschnitt 8 verschlossen, der im Abstand von der hinteren offenen Stirnseite die beiden gegenüberliegenden Seitenwände 2 und 3 miteinander verbindet.

Die Seitenwände 2, 3 weisen in ihren oberen Eckbereichen jeweils Löcher bzw. Ösen 12 auf und ebenso auch in ihrem vorderen unteren Eckbereich. Im Gebrauch werden die Seitenwände 2,3 mit diesen Ösen 12 auf die (hier nur in kurzen Abschnitten angedeuteten) Stangen bzw. Rohre 11 aufgezogen, die Teile eines Rahmens oder Gestells sind, in welchem mehrere derartige Taschen nebeneinander aufgenommen sind und welches die Vorrichtung vervollständigt. Den Kern der Erfindung bilden jedoch die Taschen, da die übrigen Teile der Vorrichtung bereits in anderen Patentanmeldungen der Anmelderin offenbart wurden.

Bei Bedarf könnte auch im vierten Eckbereich der Seitenwände 2, 3 (hinten, unten) ein entsprechende Öse 12 vorgesehen sein, durch welche eine Stange 11 hindurchgeführt werden könnte, um die Seitenwände 2, 3 zu einer im wesentlichen flachen, ebenen Form in dem Gestell bzw. Rahmen zu spannen. Im vorliegenden Fall ist es jedoch vor allen Dingen zweckmäßig, daß die Taschen zum einen an den oberen Ösen aufgehängt sind, zum anderen aber auch die Taschen entlang der Vorderkante, die den Rand der U-förmigen Aufnahmeöffnung für den Gegenstand 10 definiert, mehr oder weniger straff gespannt sind oder aber zumindest nicht beliebig weit verformt und auseinandergedrückt werden können.

In Figur 2 erkennt man, wie der Gegenstand 10, der konkret als Türverkleidung für die Tür eines Personenkraftwagens dargestellt ist, in einer entsprechenden Tasche aufgenommen ist. Der Gegenstand wird von links in die offene Stirnseite der Tasche eingeschoben, bis er mit seiner hinteren Kante an den quer verlaufenden Verbindungsabschnitt 8 anstößt. Die untere Kante des Gegenstandes 10 ruht auf dem Grund 15 der U-förmigen Tasche 1, der zum Beispiel aus einem halbsteifen Material gebildet sein kann.

Unter "halbsteif" wird im Sinne der vorliegenden Erfindung eine Materialeigenschaft verstanden, die daraus hergestellte Gegenstände im wesentlichen formstabil und selbsttragend macht, die es aber dennoch ermöglicht, das Material zum Beispiel auch von Hand unter Aufbringung entsprechend geringer Kräfte zu verformen. Ein Beispiel für halbsteifes Material in diesem Sinne wäre zum Beispiel Kartonmaterial oder aber Platten aus relativ dünnen Kunststoffmaterial wie PVC oder dergleichen.

Wie man in Figur 2 erkennt, sind die beiden Seitenwände 2, 3 in ihrem unteren Bereich nicht nur durch einen quer verlaufenden U-Steg miteinander verbunden, sondern das die beiden Seitenwände 2, 3 verbindende Teil ist seinerseits U-förmig ausgestaltet und kann zum Beispiel aus einem im wesentlichen flexiblen Bahnmaterial hergestellt sein, das auch mit dem Material der Seitenwände 2, 3 identisch ist, wobei jedoch die U-Schenkel dieses U-Abschnittes 4 wesentlich kürzer sind als die in dieser Richtung verlaufenden Seitenwände 2, 3. Die oberen Enden der U-Schenkel des U-Abschnittes 4 sind entlang der gestrichelt angedeuteten Nahtlinien 21 an die Seitenwände 2, 3 angenäht, könnten jedoch auch ebenso gut angeklebt oder angschweißt sein, je nachdem, aus welchen Materialien die Seitenwände 2, 3 und der U-Abschnitt 4 hergestellt sind.

Wie bereits erwähnt, besteht der untere, quer verlaufende U-Steg 5 zum Beispiel aus einem halbsteifen Material bzw. aus einem platten- bzw. streifenförmigen Element, das in eine entsprechende Tasche eines doppelwandigen Bahnmaterials eingeschoben ist, aus welchem der U-Abschnitt 4 hergestellt sein kann. Der vordere Endabschnitt 5 dieses Grundes 15 der U-förmigen Tasche 1 bzw. des U-Abschnittes 4 ist jedoch mit dem übrigen Teil des Grundes 15 nicht einstückig bzw. nicht starr verbunden, sondern beweglich, so daß er entlang des in Figur 2 erkennbaren Pfeiles 14 nach oben in eine vertikale Stellung verschwenkbar ist.

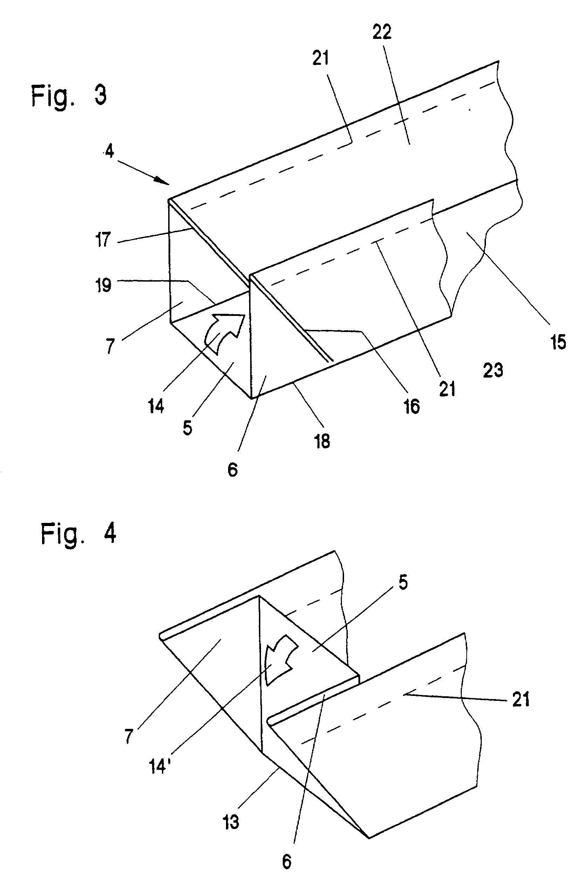

Im Detail ist der U-Abschnitt 4 in den Figuren 3 und 4 dargestellt. Der U-Abschnitt 4 besteht aus den seitlichen Schenkeln 22, 23 und dem unteren Quersteg 15. Insbesondere die seitlichen Schenkel 22, 23 sind aus einem flexiblen Bahnmaterial hergestellt, während der untere Quersteg 15, wie bereits erwähnt, aus einem halbsteifen Material besteht. Der Endabschnitt 5 dieses Quersteges 15 ist mit dem übrigen Teil des Quersteges 15 flexibel verbunden und nach oben verschwenkbar. Auch dieser Endabschnitt 5 besteht jedoch seinerseits aus einem halbsteifen Material bzw. weist ein solches halbsteifes Material auf, welches zum Beispiel in Form einer Platte in eine Tasche des im übrigen aus einem flexiblen Bahnmaterial hergestellten U-Abschnittes 4 eingeschoben ist. Mit diesem halbsteifen, unteren Endabschnitt 5 sind zwei dreieckige, ebenfalls halbsteife Endabschnitte 6, 7 der U-Schenkel 22, 23 verbunden. Diese halbsteifen Endabschnitte 6, 7 sind entlang der Knicklinien 16, 17 mit den seitlichen Schenkeln 22, 23 und entlang der Knicklinien 18, 19 mit dem unteren Endabschnitt 5 flexibel verbunden. Der Endabschnitt 5 ist ebenfalls über eine flexible Knickstelle 13 mit dem Grund 15 der U-förmigen Tasche 1 verbunden. Diese Knickstellen bzw. Knicklinien ermöglichen es, den unteren Endabschnitt 5 entlang des Pfeiles 14 in die in Figur 4 erkennbare, vertikale Stellung heraufzuklappen. Da die Elemente 5, 6, 7 zwar miteinander flexibel verbunden, ihrerseits jedoch halbsteif sind, ist dieses Hochklappen nur möglich, indem die beiden Seitenschenkel 22, 23 des U-Abschnittes 4 und damit auch die Seitenwände 2, 3 der gesamten U-förmigen Tasche 1 in dem Bereich der Knicklinien 16, 17 etwas auseinandergedrückt und verformt werden.

Dies ist umgekehrt auch erforderlich, wenn der Endabschnitt 5 entlang des Pfeiles 14' wieder zurück in die in Figur 3 dargestellte Position verschwenkt werden soll. Wenn man allerdings durch die dichte Anordnung mehrerer Taschen 1 in einem Rahmen oder Gestell und möglicherweise sogar durch Zusammendrücken dieser Taschen dafür sorgt, daß eine Verformung der Seitenwände 2, 3 und der U-Schenkel 22, 23 nicht ohne weiteres möglich ist, so kann der Endabschnitt 5 aus seiner in Figur 4 dargestellten Position auch nicht ohne weiteres nach unten zurückgeklappt werden, insbesondere nicht durch den zum Beispiel beim Transport aufgrund von Erschütterungen an diesen Endabschnitt 5 anstoßenden Gegenstand 10. Wie man in Verbindung mit Figur 2 deutlich erkennen kann, sichert der hochgeklappte Endabschnitt 5 den Gegenstand 10 gegen ein Wegrutschen und Verkippen in der U-förmigen Tasche 1.

Insbesondere beim Transport ist es also zweckmäßig, wenn die entsprechenden Taschen in einem Rahmen, Gestell, Gehäuse oder dergleichen so fixiert werden, daß die Seitenwände 2, 3 nicht ohne weiteres gegeneinander beweglich sind. Zum Beispiel kann eine Vielzahl entsprechender Taschen 1 mit ihren Ösen 12 auf den Stangen 11 aufgefädelt sein und diese Taschen können so dicht wie möglich aneinandergedrückt werden und in entsprechenden Positionen auf den Stangen bzw. Rohren 11 fixiert werden. Zum Be- und Entladen kann man diese Taschen dann freigeben, sofern es nicht anders möglich ist, den Endabschnitt 5 herunterzuklappen. Das Eingreifen von Hand und das Verkanten und Verkippen der einzelnen Plattenelemente 5, 6, 7 ermöglicht es jedoch einer geschickten Person auch, bei entsprechend zusammengedrückten Taschen den Endabschnitt 5 herunterzuklappen. In der in den Figuren 1 und 3 erkennbaren, heruntergeklappten Position des Endabschnittes 5 ist die für das Be- und Entladen vorgesehene Stirnseite der Taschen 1 vollständig frei von jeglichen Hindernissen, so daß die einzelnen Gegenstände 10 störungsfrei be- und entladen werden können.

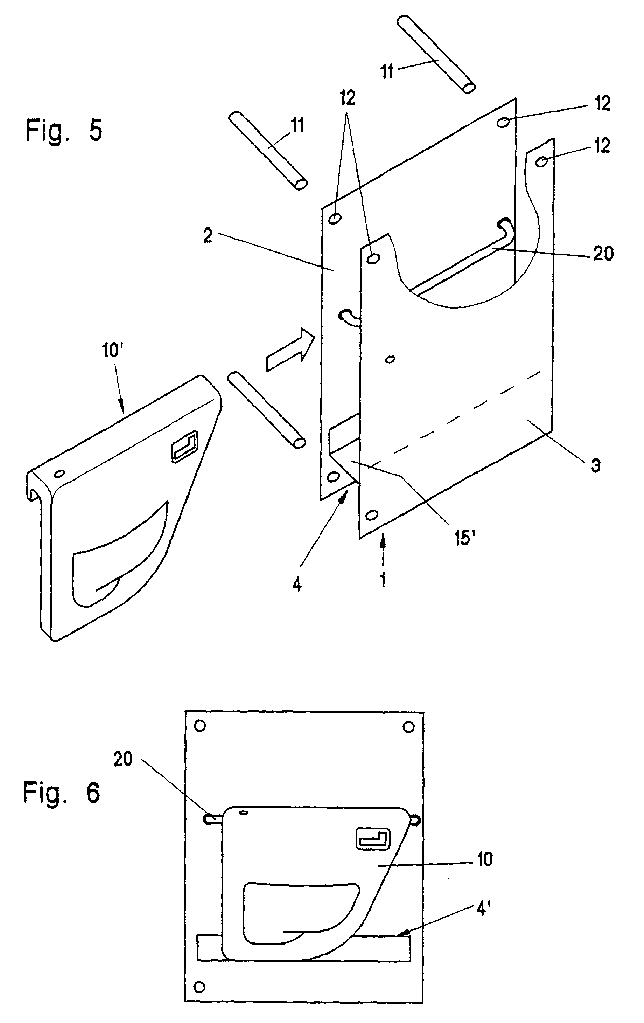

Eine Alternative zu der eben dargestellten Ausführungsform ist in den Figuren 5 und 6 dargestellt. Im Gegensatz zu der in den Figuren 1 bis 4 dargestellten Ausführungsform weist die Tasche 1' gemäß Figur 5 keinen hochklappbaren unteren, vorderen Endabschnitt des Grundes der Tasche auf, sondern stattdessen ein entlang einer Seitenwand 2' auf der Innenseite der Tasche angebrachtes Band 20, zum Beispiel ein Gummiband oder dergleichen. Der Gegenstand 10', der hier wiederum als Türverkleidung dargestellt ist, ist entlang seiner oberen Kante U-förmig umgebogen, wie man in Figur 5 erkennen kann.

Bei bzw. nach dem Einschieben in die offene Stirnseite der Tasche 1' wird der Gegenstand 10 mit seinem oberen, U-förmig umgebogenen Rand in das Gummiband 20 eingehängt und wird auf diese Weise ebenfalls gegen ein Verkippen oder Verrutschen gesichert.

Der in das Gummiband eingehängte Zustand ist in Figur 6 in einer Seitenansicht nochmals dargestellt.

## Patentansprüche

1. Vorrichtung zur Aufbewahrung und zum Transport von flachen, im wesentlichen zweidimensionalen Gegensländen (10), bestehend aus einem Gestell oder dergleichen, in welchem Taschen (1) aufgehängt sind, die im Querschnitt im wesentlichen U-förmig sind und in welche jeweils ein entsprechender Gegenstand (10) einlegbar ist, **dadurch gekennzeichnet, daß** die Taschen derart angeordnet sind, daß jeweils im hängenden Zustand der Taschen Gegenstände von ihrer Stirnseite her einlegbar sind, und daß im Inneren der Taschen Einrichtungen (5, 20) vo gesehen sind, die ein Verkippen oder Verrutschen der Gegenstände (10) in den Taschen nach vom oder hinten verhindern und die zum stimseitigen Be- und Entladen der Taschen (1) in eine Position bringbar sind, in welcher sie den freien Beladequerschnitt nicht einengen.

2. Vorrichtung nach Anspruch 1, **dadurch gekennzeichnet, daß** die Einrichtung ein entlang der Innenseite einer Seitenwand der Tasche (1) gespanntes, elastisches Band ist, in welches der Gegenstand (10) mit einem hakenförmig umgebogenen Teil eingehängt werden kann.

3. Vorrichtung nach Anspruch 1, **dadurch gekennzeichnet, daß** mindestens für eine der Stirnseiten der U-förmigen Taschen jeweils ein Querteil (5) vorgesehen ist, welches in mindestens eine, die offene Stirnseite im wesentlichen freigebende Stellung und in eine andere, die offene Stirnseite mindestens teilweise verschließende Stellung bewegbar und in dieser letztgenannten Stellung fixierbar ist.

4. Vorrichtung nach Anspruch 3, **dadurch gekennzeichnet, daß** das Querteil (5) in seinem die Stirnseite mindestens teilweise verschließenden Zustand im Inneren der U-förmigen Tasche und im Abstand zu deren offener Stirnseite angeordnet ist.

5. Vorrichtung nach Anspruch 3 oder 4, **dadurch gekennzeichnet, daß** das Quertell (5) aus elnem Endabschnitt des unteren, den Grund der Tasche bildenden U-Abschnittes gebildet ist.

6. Vorrichtung nach Anspruch 5, **dadurch gekennzeichnet, daß** der Endabschnitt (5, 6, 7) aus einem halbsteifen Material gebildet ist welches vorzugsweise steifer ist als die Seltenteile (2, 3) der U-förmigen Taschen (1).

7. Vorrichtung nach Anspruch 5 oder 6, **dadurch gekennzeichnet, daß** der untere U-Abschnitt im wesentlichen über seine gesamte Länge eine mindestens halbsteife Platte mit einem abknickbaren Endabschnitt (5) aufweist.

8. Vorrichtung nach einem der Ansprüche 4 bis 6, **dadurch gekennzeichnet, daß** der untere U-Abschnitt der U-förmigen Taschen aus einem mindestens teilweise doppelwandigen, flexiblen Bahnmaterial besteht, wobei zwischen die beiden Wände des doppelwandigen Bahnmaterials mindestens eine kurze, halbsteife, den Endabschnitt des U-Abschnittes bildende Endabschnittsplatte eingeschoben ist.

9. Vorrichtung nach einem der Ansprüche 3 bis 8, **dadurch gekennzeichnet, daß** der untere U-Abschnitt der Taschen seinerseits aus einem im Querschnitt im wesentlichen U-förmigen Bahnmaterial gebildet ist, dessen U-Schenkel wesentlich kürzer sind als die von den Seitenteilen der U-förmigen Taschen insgesamt gebildeten U-Schenkel und welche an diesen befestigt sind.

10. Vorrichtung nach Anspruch 9, **dadurch gekennzeichnet, daß** auch die Endabschnitte der kurzen U-Schenkel des unteren U-Abschnittes aus einem halbsteifen Material bestehen bzw. eine aus einem solchen Material bestehende Einlage aufweisen, wobei diese seiüichen, halbsteifen Endabschnitte von im wesentlichen dreieckiger Form und neben den im unteren U-Quersteg angeordneten halbsteifen Endabschnitt angeordnet sind.

11. Vorrichtung nach einem der Ansprüche 3 bis 10, **dadurch gekennzeichnet, daß** die seitlichen U-Schenkel (2, 3) der U-förmigen Taschen (1) über den unteren Quersteg des unteren U-Abschnittes (4) hinaus verlängert sind, so daß im Querschnitt im wesentlichen eine H-Form mit relativ kurzen unteren H-Schenkeln definiert wird.

12. Vorrichtung nach einem der Ansprüche 3 bis 11, **dadurch gekennzeichnet, daß** die U-förmigen Taschen in der Seitenansicht an mindestens drei ihrer Ecken aufgehängt sind.

13. Vorrichtung nach Anspruch 12, **dadurch gekennzeichnet, daß** die U-förmigen Taschen neben der Aufhängung an ihrem oberen Ende mindestens auch im Bereich des unteren Endes einer offenen Stirnseite aufgehängt sind.

## Claims

1. Apparatus for storing and transporting flat, substantially two-dimensional objects (10), comprising a support stand or the like, in which are suspended pockets (1) which are substantially U-shaped in cross-section and into each of which can be inserted a corresponding object (10), **characterised in that** the pockets are arranged in a manner that in the hanging condition thereof objects (10) may be loaded or removed through the ends thereof and **in that** means (5, 20) are provided within said pockets which prevent tilting or slipping of the articles in the pockets forwardly or rearwardly, and which means (5, 20), in order to load and discharge said pockets (1) through the ends thereof, may be brought into a position in which they are not interfering with the free-loading cross section thereof.

2. Apparatus according to claim 1 **characterised in that** the device is a preferably elastic band which is tensioned along the inward side of a side wall of the pocket (1) and into which the object (10) can be engaged with a part which is bent over in a hook shape.

3. Apparatus according to claim 1 **characterised in that** there is provided at least for one of the ends of the U-shaped pockets a respective transverse portion (5) which is movable into at least one position of substantially clearing the open end and into another position of at least partially closing the open end, and is fixable in said last-mentioned position.

4. Apparatus according to claim 3 **characterised in that** in its condition of at least partially closing the end the transverse portion (5) is arranged in the interior of the U-shaped pocket and at a spacing relative to the open end thereof.

5. Apparatus according to claim 3 or claim 4 **characterised in that** the transverse portion (5) is formed from an end section of the lower U-shaped section forming the bottom of the pocket.

6. Apparatus according to claim 5 **characterised in that** the end section (5, 6, 7) is formed from a semi-stiff material which is preferably stiffer than the side portions (2, 3) of the U-shaped pockets (1).

7. Apparatus according to claim 5 or claim 6 **characterised in that** the lower U-shaped section has substantially over its entire length an at least semi-stiff panel with an end section (5) which can be bent over.

8. Apparatus according to one of claims 4 to 6 **characterised in that** the lower U-shape section of the U-shaped pockets comprises an at least partially double-walled flexible web material, wherein inserted between the two walls of the double-walled web material is at least one short, semi-stiff end section panel forming the end section of the U-shape section.

9. Apparatus according to one of claims 3 to 8 **characterised in that** the lower U-shape section of the pockets is in turn formed from a web material which is substantially U-shaped in cross-section and the limbs of the U-shape of which are substantially shorter than the limbs of the U-shape formed by the side portions of the U-shaped pockets overall and which are secured to same.

10. Apparatus according to claim 9 **characterised in that** the end sections of the short limbs of the U-shape of the lower U-shape section also comprise a semi-stiff material or have an inlay comprising such a material, wherein those lateral, semi-stiff end sections are of substantially triangular shape and are arranged beside the semi-stiff end section which is arranged in the lower transverse portion of the U-shape.

11. Apparatus according to one of claims 3 to 10 **characterised in that** the lateral limbs (2, 3) of the U-shaped pockets (1) are prolonged beyond the lower transverse portion of the lower U-shape section (4) so that essentially an H-shape with relatively short lower limbs of the H-shape is defined in cross-section.

12. Apparatus according to one of claims 3 to 11 **characterised in that** in side view the U-shaped pockets are suspended at at least three of their comers.

13. Apparatus according to claim 12 **characterised in that** the U-shaped pockets, besides being suspended at their upper end, are suspended at least also in the region of the lower end of an open end of the pocket.

## Revendications

1. Dispositif de stockage et de transport d'objets plats (10), sensiblement bidimensionnels, constitué d'un bâti ou analogue, dans lequel sont suspendues des poches (1) qui ont sensiblement une forme de U en coupe transversale et dans chacune lesquelles peut être inséré un objet correspondant (10), **caractérisé en ce que** les poches sont disposées de telle sorte que, lorsque les poches sont suspendues, les objets peuvent être insérés depuis leur côté frontal, et **en ce qu'**il est prévu à l'intérieur des poches des dispositifs (5, 20) qui empêchent les objets (10) de basculer et de se déplacer dans les poches vers l'avant ou vers l'arrière et qui, pour remplir et vider les poches (1) du côté frontal, peuvent être amenés dans une position dans laquelle ils ne réduisent pas la section de chargement libre.

2. Dispositif selon la revendication 1, **caractérisé en ce que** le dispositif est une bande élastique qui est tendue le long d'une paroi latérale de la poche (1) et dans laquelle l'objet (10) peut être suspendu à une partie incurvée en forme de crochet.

3. Dispositif selon la revendication 1, **caractérisé en ce qu'**il est prévu, au moins pour l'un des côté frontaux d'une poche en forme de U, une pièce transversale (5) qui est mobile dans au moins une position libérant sensiblement le côté frontal ouvert et dans une autre position fermant au moins partiellement le côté frontal ouvert et qui peut être fixée dans cette dernière position.

4. Dispositif selon la revendication 3, **caractérisé en ce que** la pièce transversale (5) est disposée à l'intérieur de la poche en forme de U lorsqu'elle ferme au moins partiellement le côté frontal et à distance de son côté frontal ouvert.

5. Dispositif selon la revendication 3 ou 4, **caractérisé en ce que** la pièce transversale (5) est formée par une portion d'extrémité de la portion inférieure du U formant le fond de la poche.

6. Dispositif selon la revendication 5, **caractérisé en ce que** la portion d'extrémité (5, 6, 7) est formée à partir d'un matériau semi-rigide qui est avantageusement plus rigide que les parties latérales (2, 3) des poches (1) en forme de U.

7. Dispositif selon la revendication 5 ou 6, **caractérisé en ce que** la portion inférieure du U comporte une plaque au moins semi-rigide présentant une portion d'extrémité pliable (5) sensiblement sur toute sa longueur.

8. Dispositif selon l'une des revendications 4 à 6, **caractérisé en ce que** la portion inférieure du U des poches en forme de U est en un matériau en bande flexible au moins partiellement à double paroi, au moins une courte plaque de portion d'extrémité semi-rigide formant la portion d'extrémité de la portion du U étant insérée entre les deux parois des matériau en bande à double paroi.

9. Dispositif selon l'une des revendications 3 à 8, **caractérisé en ce que** la portion inférieure du U des poches est formée de son côté à partir d'un matériau en bande, sensiblement une forme de U en coupe transversale, dont les branches du U sont sensiblement plus courtes que les branches du U qui sont formées dans l'ensemble par les parties latérales des poches en forme de U et auxquelles elles sont fixées.

10. Dispositif selon la revendication 9, **caractérisé en ce que** les portions d'extrémité de la branche courte du U de la portion inférieure du U sont également en un matériau semi-rigide ou comportent une couche intérieure en un tel matériau, ces portions d'extrémité latérales semi-rigides sont de forme sensiblement triangulaire et sont disposées à côté de la portion d'extrémité semi-rigide placée dans le dos transversal inférieur du U.

11. Dispositif selon l'une des revendications 3 à 10, **caractérisé en ce que** les branches latérales (2, 3) du U des poches (1) en forme de U sont prolongées au-delà du dos transversal inférieur de la portion inférieure (4) du U de manière à définir en coupe transversale sensiblement une forme de H dont les branches inférieures sont relativement courtes.

12. Dispositif selon l'une des revendications 3 à 11, **caractérisé en ce que** les poches en forme de U sont suspendues dans la vue latérale en au moins trois de leurs coins.

13. Dispositif selon la revendication 12, **caractérisé en ce que**, en plus d'être suspendue à leur extrémité supérieure, les poches en forme de U sont suspendues au moins également au niveau de l'extrémité inférieure d'un côté frontal ouvert.
